(19) Europäisches Patentamt
European Patent Office
Office européen des brevets

(11) **EP 2 918 647 A1**

(12) **EUROPEAN PATENT APPLICATION**

(43) Date of publication:
**16.09.2015 Bulletin 2015/38**

(51) Int Cl.:
***C09D 127/06*** (2006.01)     ***C08K 13/04*** (2006.01)
*C08L 27/06* (2006.01)           *C08K 5/12* (2006.01)
*C08K 7/22* (2006.01)

(21) Application number: **15158464.6**

(22) Date of filing: **10.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **12.03.2014 JP 2014048565**

(71) Applicant: **Toyota Jidosha Kabushiki Kaisha Toyota-shi, Aichi 471-8571 (JP)**

(72) Inventors:
• **Mihara, Satoshi**
  **Toyota-shi, Aichi 470-0492 (JP)**
• **Sugata, Hiroyuki**
  **Toyota-shi, Aichi 471-8571 (JP)**

(74) Representative: **Raynor, Stuart Andrew**
  **J A Kemp**
  **14 South Square**
  **Gray's Inn**
  **London WC1R 5JJ (GB)**

(54) **Vinyl chloride plastisol composition**

(57)    A vinyl chloride plastisol composition contains a vinyl chloride resin and a plasticizer as main ingredients. A thermally expandable microcapsule is added in a range of 2 parts by weight to 12 parts by weight to 100 parts by weight of the vinyl chloride resin. A non-expandable hollow filler is added in a range of 10 parts by weight to 50 parts by weight to 100 parts by weight of the vinyl chloride resin. The vinyl chloride resin is contained in the vinyl chloride plastisol composition in a range of 15% by weight to 50% by weight.

EP 2 918 647 A1

**Description**

TECHNICAL FIELD

This invention relates to a paint for chipping-resistant coating that is coated on a back part of a floor, a wheelhouse part, a side sill part, a front apron part, and the like of a floor of an automobile body to protect a vehicle body, particularly to a vinyl chloride plastisol composition that shows a high sound insulation, while being able to form a coating film that is good at an anti-chipping property even if it is made into a low specific gravity for reducing a weight of the car body.

BACKGROUND ART

There is generated a chipping phenomenon that a coating film is peeled off at a lower structural part of the car body due to collision of pebbles or gravels that are splashed by a tire when the car is running. The lower structural part may be a back part of a floor, a wheelhouse part (tire housing part), a rocker panel, a side sill part, a front apron part, a front/rear fender part, a lower part of a door, and the like. Therefore, a coating film has been formed traditionally on a surface of a steel sheet for automobile in a painting process in order to prevent the chipping phenomenon. Such coating film was made by painting and drying an undercoating, which uses a plastisol paint of a vinyl chloride resin, on the surface of the steel sheet.

On the one hand, the plastisol paint of vinyl chloride resin is coated on the lower structural part (or the like) of the car body to form the coating film to give the chipping resistant property. On the other hand, the undercoating is required to give a sound insulation function to lower a splashing noise, in addition to the chipping-resistance. However, the conventional plastisol paint of vinyl chloride commonly forms a tough and hard coating film to enhance the chipping-resistant property. Such tough and hard coating material could not effectively reduce the splashing noise that was generated when the small stones or gravels or the like hit it.

In view of that, a patent literature No. 1 (PTL 1) shows a measure to effectively reduce the splashing noise, for example. In the document, a plastisol paint for chipping-resistance is mixed with a chemical blowing agent (decomposition-type blowing agent) that produces gas by chemical reaction by a heat, such as an azodicarbonamide (ADCA), for example. Thus, it is known, as shown in the document, that the coating film formed by such method becomes thicker, thereby to heighten the sound insulation. However, the method to use such a chemical blowing agent is inferior in a foaming uniformity, since it is affected by a condition in rising temperature, a place to be coated, a coating amount and the like. Moreover, closed cells are hard to be produced in the resultant foam, but open cells of big diameter are easy to be frequently produced. Furthermore, the cells are connected in plurality at a superficial part of the coating film, thereby to cause bulging portions or swollenness (irregularities in cells). Thus, it is difficult to control the cells, so that it has not been easy to obtain stable characteristics such as the sound insulating property, the chipping-resistance property and the like.

As mentioned above, it is required for the undercoating to be excellent in the chipping-resistant property and in the sound insulating property. In addition, there have been increasing needs for high performance and luxury in the automobile in recent years. Moreover, the automobile is expected to be lither in weight as the fuel efficiency has been accelerated mainly for the purpose of improvement in fuel economy in automobiles from an environmental view such as decreasing global warming and protecting the global environment. Accordingly, there has been increased needs for the undercoating used for the automobiles to have a low specific gravity. That is, the undercoating is commonly used in an amount of 2kg to 5kg per one automobile, though it depends on a size of the vehicle. Thus, if the undercoating can have a lower specific gravity, it shall contribute to the improvement in the fuel efficiency of the automobiles.

A patent literature No. 2 (PTL 2) or a patent literature No. 3 (PTL 3) discloses a method for the lower specific gravity, for example. That is, they disclose mixing plastic or inorganic hollow microspheres in a plastisol paint for chipping-resistance. Moreover, a patent literature No. 4 (PTL 4) teaches mixing unexpanded microcapsules in a undercoating material to expand the unexpanded microcapsules at the time of baking, thereby lowering a density of a coating film to contribute to the weight saving.

[Patent Literature]

[PTL 1] Japanese Patent Laid-Open Patent Publication No. 10-237250
[PTL 2] Japanese Patent Laid-Open Patent Publication No. 5-117575
[PTL 3] Japanese Patent Laid-Open Patent Publication No. 6-128438
[PTL 4] Japanese Patent Laid-Open Patent Publication No. 6-157976

## SUMMARY OF THE INVENTION

### TECHNICAL PROBLEM

It is true that the weight is saved by mixing the plastic or inorganic hollow microspheres in the plastisol composition. However, it is difficult for such microspheres mixing to ensure the sound insulating property that has been required more strictly in recent years. On the other hand, the unexpanded microcapsules expand at the time of baking to ensure a thickness of the coating film to be large. However, it serves less in terms of the weight saving as compared with the plastic or inorganic micro-spheres. Thus, the microcapsules need to be mixed in large quantity to provide a coating film having a desired low specific gravity. Still, in such case, there are large quantity of expanded microcapsules in the coating film. Consequently, a cushioning property of the coating film is deteriorated, thereby degrading the chipping-resistant property.

### SOLUTION TO PROBLEM

In view of the above-stated problems, an object of the present invention is to provide a vinyl chloride plastisol composition that is able to form a coating film with a high sound insulating property and a good chipping-resistant property, while having a low specific gravity, thereby stably attaining properties such as the sound insulating property and the chipping-resistant property.

According to the present invention, there is provided a vinyl chloride plastisol composition that comprises a main ingredient composed of a vinyl chloride resin and a plasticizer, a thermally expandable microcapsule, and a non-expandable hollow filler. The thermally expandable microcapsule is a capsule-like body which has a core-shell structure containing vaporizable substance at an inside thereof. The shell of the microcapsule is softened at a predetermined temperature range, and the vaporizable substance contained inside the shell changes into a gas. Thus, the shell is expanded with increase of a pressure (expansion force/vapor pressure) of the gas inside the shell. Consequently, the microcapsule enlarges a volume of the shell to become a hollow microballoon. The inventive composition may use a microcapsule that encloses an organic solvent (as a core) of a low boiling point with a thermoplastic resin (as a shell), for example. The thermoplastic resin (as a shell) may be a vinylidene chloride, an acrylonitrile, an acrylonitrile-vinylidene chloride copolymer, an acrylonitrile-methyl methacrylate copolymer, and the like. The organic solvent may be a low-boiling hydrocarbon and the like. Moreover, the non-expandable hollow filler is a hollow balloon (hollow body) that maintains a predetermined hollow rate without being molten or expanded even by heat at the time of baking. For example, an inorganic hollow filler or an organic hollow filler are used as the non-expandable hollow filler. The inorganic hollow filler may be glass balloons, silica balloons, Shirasu balloons (hollow microspheres produced by heat treatment of natural volcanic glassy ashes that are called "Shirasu" in Japanese), inorganic carbon hollow body or hollow spheres, or the like. The organic hollow filler may be plastic hollow body or hollow spheres made of an organic synthetic resin such as a vinylidene chloride, an acrylonitrile, a polyvinylidene chloride or a copolymer thereof. That is, the non-expandable hollow filler consists of non-expandable hollow balloon or hollow body. The non-expandable hollow filler has a predetermined rigidity or strength so as not to be expanded by heating, contrary to the thermally expandable microcapsule, and so as not to be easily compressed under an external pressure. That is, the non-expandable hollow filler maintains its original shape and original dimension during a heating/expanding process of the vinyl chloride plastisol composition and inside a coating film thereafter.

In the vinyl chloride plastisol composition, the thermally expandable microcapsules may have an expansion start temperature in a range of 70 to 130 degrees centigrade, preferably in a range of 80 to 120 degrees centigrade. The expansion start temperature is a temperature at which the microcapsules start expanding when heated wherein a thermoplastic resin or the like constituting the shell starts softening and the vaporizable substance such as a hydrocarbon contained in the shell starts vaporizing to increase an internal pressure thereof at the same time.

In the vinyl chloride plastisol composition, the thermally expandable microcapsule may have a mixing ratio of 2 to 12 parts by weight to 100 parts by weight of the vinyl chloride resin, preferably 5 to 10 parts by weight to 100 parts by weight of the vinyl chloride resin.

In the vinyl chloride plastisol composition, the non-expandable hollow filler may have a median diameter in a range of 10 to 50 micrometers and an absolute specific gravity in a range of 0.1 to 0.5. According to the definition of terms in the main document and the commentary paper of JIS (Japanese Industrial Standards) Z 8901, the "median diameter" is a particle diameter (particle size) at which 50% of all the particles in terms of number (or mass) are coarser than a certain diameter in the particle size distribution of powder. That is, it is a particle diameter at which the size of 50% of all the particles is larger than that of the certain diameter. Generally, it is referred to as a "median diameter" or "50% particle diameter"-and expressed as "D50". In terms of definition, the size of the powder/particle group is represented by a mean particle diameter and the median diameter. In the present invention, the median diameter is a value of a median diameter measured by the laser diffraction/scattering method (according to an indication of item description).

The "median diameter measured by the laser diffraction/scattering method" is a particle diameter (D50) at which a cumulative weight percentage (or cumulative parts by weight) becomes 50% in the particle size distribution that is obtained by the laser diffraction/scattering method using a laser diffraction type particle size distribution meter. The value of the particle diameter is not a strict one but an approximate value. Naturally, it is an approximate value including an error. Thus, the present invention does not disclaim a value that includes an error of dozens of percentage point. By this error, a median diameter is nearly equal to a mean particle diameter in the case that a particle size distribution is almost symmetry with respect to a center (50% particle diameter).

In the vinyl chloride plastisol composition, the non-expandable hollow filler may have a mixing ratio in a range of 10 to 50 parts by weight to 100 parts by weight of the vinyl chloride resin, preferably in a range of 15 to 30 parts by weigh to 100 parts by weight of the vinyl chloride resin.

The vinyl chloride plastisol composition may contain the vinyl chloride resin in a range of 15% by weight to 50% by weight.

ADVANTAGEOUS EFFECTS OF INVENTION

As a characteristic feature, the vinyl chloride plastisol composition of the present invention contains the thermally expandable microcapsule and the non-expandable hollow filler. Specifically, the vinyl chloride plastisol composition contains the thermally expandable microcapsule. Thereby, when the thermally expandable microcapsule is heated at the time of baking, the internal vaporizable substance is vaporized. Consequently, the shell of the microcapsule is swollen or expanded by the pressure at that time, so that the microcapsule becomes a hollow microballoon. Thus, a coating layer or film of the vinyl chloride plastisol composition, which is coated on a predetermined place, is also swollen by the expanded hollow microballoons, thereby giving the coating layer or film a large thickness (or increased thickness). As a result, the vinyl chloride plastisol composition is surely able to form a coating film having a high sound insulating property without increasing a coating amount thereof due to the increased thickness. At this time, the coating film has a small specific gravity, since the thickness is increased by use of a volume expansion of the thermally expandable microcapsule. Therefore, a weight of the coating film is restrained from increasing, though the coating film has the increased thickness. Moreover, since the vinyl chloride plastisol composition is mixed with the non-expandable hollow filler, it is able to form a coating film that has a very small specific gravity and that is very lightweight. Furthermore, the present invention uses the volume expansion of the thermally expandable microcapsule by heating them to vaporize the internal vaporizable substance and inflate the shell by the pressure of the vaporized substance, thereby forming the hollow microballoon to increase the thickness of the coating layer (coating film). In this case, the formation of the hollow microballoon as gas bubble is hard to be susceptible to a coating/painting condition such as a heating/hardening condition, a place to be coated, a coating amount and the like and/or to a viscosity at the time of heating/hardening, as compared with the case in which gas is produced by decomposing a chemical blowing agent to form gas bubble and thereby to increase a thickness of a coating film. Moreover, in this case, the hollow microballoon is easy to be uniform and small closed pore. Consequently, the vinyl chloride plastisol composition ensures the coating film to restrain deterioration of the chipping resistance and to have a stable sound insulating property. As described above, since the vinyl chloride plastisol composition of the present invention contains the thermally expandable microcapsule and the non-expandable hollow filler, the obtained coating film surely has a good sound insulating property and a good chipping resistant property, though it is lightweight.

Thus, according to the vinyl chloride plastisol composition of the present invention, there is provided a coating film that has high sound insulating property and good chipping resistant property, while having a low specific gravity, Moreover, the coating film is give the properties of the sound insulation and the chipping resistance in a stable manner. Furthermore, the vinyl chloride plastisol composition serves to reduce a weight of a vehicle because of the low specific gravity of the coating film.

In addition, if the vinyl chloride plastisol composition has the expansion start temperature in the range of 70 to 130 degrees centigrade, a maximum expansion temperature of the thermally expandable microcapsule becomes approximately 110 to 210 degrees centigrade. That is, the maximum expansion temperature of the thermally expandable microcapsules lie in a range of a heating temperature (normally 120 to 160 degrees centigrade) at the time of baking that is adopted in an existing automobile paint line. Within such range, the thermally expandable microcapsules become hollow microballoon having a high expansion rate, while keeping the shell from being busted. Accordingly, in addition to the above mentioned advantageous effects, the vinyl chloride plastisol composition is very suitable for use in the existing automobile lines. Moreover, when used in the automobile paint line, the vinyl chloride plastisol composition is given a high efficiency in forming a thick coating film, since the thermally expandable microcapsule has the above-defined range of the expansion start temperature and expand at a high expansion rate under a heating condition of nearly the maximum expansion temperature. In other words, with such high expansion rate, it is sufficient to mix the thermally expandable microcapsule in a minimum amount to ensure a predetermined film thickness (after baking) that satisfies a required sound insulation for the coating film. Such minimum amount ("lowest mixing amount" hereafter) is enough lower than a mixing ratio that may cause deterioration of the chipping resistance ("highest mixing amount" hereafter). As a result, in case of using the thermally expandable microcapsules having the above-defined range of expansion start temperature, the mixing amount of the thermally expandable microcapsules is freely selected within a fixed range between the lowest mixing amount and the highest mixing amount in the vinyl chloride plastisol composition. Moreover, such mixing amount enables the coating film after baking to ensure at least a desired level of chipping resistance, while improving the sound insulation to a desired level at the same time (i.e. two trade-off requirements can be satisfied at once).

In the vinyl chloride plastisol composition, if the thermally expandable microcapsule has the mixing ratio of 2 to 12 parts by weight to 100 parts by weight of the vinyl chloride resin, the film thickening effect of the coating film (or expansion rate of the coating film) by the thermally expandable microcapsule is high. Consequently, the coating film is provided with a sufficient sound insulation and a good chipping resistance at once. That is, in this case, in addition to the above-described advantageous effects, the vinyl chloride plastisol composition is able to form a coating film that ensures the sound insulating property required for an undercoating of an automobile and the chipping resistant property to a sufficient degree at the same time.

In the vinyl chloride plastisol composition, if the non-expandable hollow filler has a median diameter in a range of 10 to 50 micrometers and an absolute specific gravity in a range of 0.1 to 0.5, the non-expandable hollow filler has a desired pressure capacity and is hard to be broken even by the spray painting or the like, in addition to the above-stated effects. Moreover, the non-expandable hollow filler enables the resultant coating film to have a desired property such as a strength or the like. Furthermore, if the absolute specific gravity of the non-expandable hollow filler is within the above range, the non-expandable hollow filler is easy to handle and has a good workability, while being highly effective in ensuring the coating film to have a desired lightweight effect even in a small mixing amount. Consequently, the vinyl chloride plastisol composition ensures the coating film to have a prescribed physical property such as the coating film strength as well as keeping a stable effect of reducing the specific gravity.

In the vinyl chloride plastisol composition, if the non-expandable hollow filler has a mixing ratio of 10 to 50 parts by weight to 100 parts by weight the vinyl chloride resin, the coating film to be formed surely has a good chipping resistance and a high effect in reducing the specific gravity, in addition to the above-stated effects.

In the vinyl chloride plastisol composition, if the vinyl chloride resin is contained in a range of 15 to 50 % by weigh in the composition as a whole, even if the thermally expandable microcapsules and the non-expandable hollow filler are mixed, there is surely formed a coating film that has a sufficient chipping resistance required for the undercoating of the automobile. Moreover, the vinyl chloride plastisol composition has a good storage stability.

Further objects and advantages of the invention will be apparent from the following description, reference being had to the accompanying drawings, wherein preferred embodiments of the invention are clearly shown.

DESCRIPTION OF EMBODIMENTS

An embodiment of the present invention is described hereafter. In the embodiment, values identified in the same column of Table 1 and Table 2 show a magnitude of a number or a quantity. Since a material thereof is basically the same in itself, a repeated description is left out hereafter to avoid redundancy.

A vinyl chloride plastisol composition according to the present embodiment contains therein a vinyl chloride resin and a plasticizer as main ingredients, and a thermally expandable microcapsule and a non-expandable hollow filler as essential additives.

As the vinyl chloride resin (PVC), there may be used a homopolymer of a vinyl chloride or a vinylidene chloride, or a copolymer thereof, that is, a copolymer of a vinylidene chloride or a vinyl chloride and other vinyl monomer is used. As the vinyl monomer to be copolymerized with the vinyl chloride or the vinylidene chloride, there may be used vinyl esters such as a vinyl acetate, a vinyl propionate or a vinyl stearate, vinyl ethers such as a vinyl methyl ether or a vinyl isobutyl ether, maleic acid esters such as a diethyl maleate or the like, fumaric acid esters such as a dibutyl fumarate, (meth)acrylic acid alkyl esters such as a methyl acrylate, an ethyl acrylate, a 2-ethylhexyl acrylate, 2-hydroxyethyl acrylate, hydroxyalkyl esters of acrylic acid or methacrylic acid such as 2-hydroxyethyl acrylate, 2-hydroxyethyl methacrylate, a hydroxypropyl acrylate, a hydroxypropyl methacrylate, hydroxyalkyl amides of acrylic acid or methacrylic acid such as a N-methylol acrylamide, a N-methylol methacrylamide, a N-hydroxyethyl acrylamide, a N-dihydroxyethyl methacrylamide, an acrylonitrile or the like. They may be copolymerized with the vinyl chloride generally at a rate of 40 % by weight (wt%) or less, preferably at a rate of 30 wt% or less. Among them, the vinyl acetate is preferred as the monomer to be copolymerized with the vinyl chloride or vinylidene chloride, from the viewpoint of a swelling/gelling property to a plasticizer or a high adhesion to a metal surface. Moreover, the rate of the vinyl acetate to be copolymerized is preferably 10 wt% or less from the viewpoint of the storage stability, water resistance, chemical resistance and the like. The vinyl chloride may also be a crosslinkable copolymer having - $CH_2ROH$ group. Furthermore, as such vinyl chloride resin, one kind of vinyl chloride resin may be used alone, or two or more kinds of vinyl chloride resins may be used in appropriate combination.

The vinyl chloride resin preferably has an average degree of polymerization in the range of 500 to 2500, more preferably in the range of 850 to 2000, and still more preferably in the range of 1000 to 1900, from the viewpoint of obtaining a high storage stability, a good chipping resistance and a tough coating property. The particle diameter of the vinyl chloride resin is usually in the range of 0.1 $\mu$m to 100$\mu$m, preferably, in the range of 1$\mu$m to 50$\mu$m, more preferably, in the range of 1$\mu$m to 40$\mu$m.

The vinyl chloride resin is preferably contained in the composition in a range of 15 wt% to 50 wt%. If the content of the vinyl chloride resin is too low, it is not possible to compensate for the deterioration in chipping resistance by adding the thermally expandable microcapsule and the non-expandable hollow filler. In such case, it is impossible to sufficiently secure the chipping resistance required for the undercoating for automobiles. On the other hand, if the content is too high, it makes the storage stability of the composition worse. Moreover, in such case, viscosity of the composition becomes excessive, thereby deteriorating a discharging efficiency of the composition from a pumping device that is used in the case of the spray painting, with a resultant lowering in workability. If the vinyl chloride resin is contained in the composition in the range of 15 wt% to 50 wt%, it is possible to ensure a good storage stability of the composition. Moreover, even where the thermally expandable microcapsule and the non-expandable hollow filler are added, the composition is able to surely form a coating film that has a sufficient chipping resistance required for the undercoating of the automobiles.

As the plasticizer for plasticizing a vinyl chloride resin, basically, any type of plasticizers may be used as long as it is used commonly to form the above kind of plastisol compositions. For example, as the plasticizer, phthalic acid ester series may be used such as a dibutyl phthalate (DBP), a dihexyl phthalate (DHP), a di-2-ethylhexyl phthalate (DOP), a di-n-octyl phthalate (DnOP), a diisooctyl phthalate (DIOP), a didecyl phthalate (DDP), a dinonyl phthalate (DNP), a diisononyl phthalate (DINP), a dimethyl phthalate (DMP), a diethyl phthalate (DEP), a bis-2-ethylhexyl phthalate (DEHP), a diisodecyl phthalate (DIDP), a $C_6$-$C_{10}$ mixed higher alcohol phthalate, a butyl benzyl phthalate (BBP), an octyl benzyl phthalate, a nonyl benzyl phthalate, and a dimethylcyclohexyl phthalate (DMCHP). As the plasticizer, straight-chain dibasic acid esters may be used such as a dioctyl adipate (DOA), a dioctyl azelate (DOZ), and a dioctyl sebacate (DOS), too. As the plasticizer, phosphoric acid ester series may be used such as a tricresyl phosphate (TCP), a trioctyl phosphate (TOF), a trixylenyl phosphate (TXP), a monooctyl diphenyl phosphate, a monobutyl-dixylenyl phosphate (B-Z-X), too. As the plasticizer, benzoic acid ester series may be used such as tri(2-ethylhexyl) trimellitate (TOTM), a tri-n-octyl trimellitate, a triisodecyl trimellitate, a tri-iso-octyl trimellitate, too. As the plasticizer, esters may be used such as a butyl phthalate butyl glycolate (BPBG), a tributyl citrate ester, a trioctyl-acetyl citric acid ester, a trimellitic acid ester, a citric acid ester, a sebacic acid ester, an azelaic acid ester, a tri- or tetraethylene glycol ester of maleate $C_6$-$C_{10}$ fatty acid, an alkyl sulfonic acid ester, and a methyl acetyl ricinoleate, too. The plasticizer may be an saturated fatty acid glyceride such as a soybean oil having double bonds thyereof epoxidized with a hydrogen peroxide or a peracetic acid, that is, en epoxidized soy bean oil (ESBO), too. The plasticizer may be an epoxidized vegetable oil such as an epoxy compound of an alkyl oleate ester or the like of butyl or octyl, or a viscous low polymerization degree polyester of an average molecular weight of about 500 to 8000 having a straight chain of propylene glycol ester units of a dibasic acid such as an adipic acid (e.g. an adipic acid polyester, a phthalic acid-based polyester) or the like, too. As the plasticizer, one of them may be used alone or two or more of them may be used in appropriate combination. Among them, the phthalic ester is one of the most common plasticizers and is easy to be procured, thereby contributing to cost reduction. Moreover, the phthalic ester is capable of dispersing the vinyl chloride resin still more uniformly, thereby forming a stable vinyl chloride plastisol. Particularly, from the viewpoint of elimination of an environmental load, ease of handling, solubility, coating property, storage stability and so on, the diisononyl phthalate (DINP) or the dioctyl phthalate (DOP) is used most commonly among the phthalates.

It is preferable to mix the plasticizer in a range of 40 parts by weight to 400 parts by weight to 100 parts by weight of the vinyl chloride resin, in order to make a coating film soft and/or flexible after being hardened, thereby reducing an impact by thrown-up stones such as gravels or pebbles, while expanding sufficiently the thermally expandable microcapsules inside the coating film. If a mixing amount is too small, a softness/flexibility of the vinyl chloride resin lowers, so that the coating film is unable to exert the sound insulating property or the chipping resistance property at full. Moreover, the storage stability may deteriorate. Furthermore, it is possible that the discharging efficiency deteriorates in case of spray painting, thereby degrading workability. On the other hand, if the mixing amount is too large, the viscosity of the paint is decreased. Consequently, the coating which was painted may flow (sag) in case of spray painting. A more preferred amount of the plasticizer is in a range of 45 parts by weight to 300 parts by weight to 100 parts by weight of the vinyl chloride resin.

The thermally expandable microcapsule (also referred to as "microballoon") in the present embodiment (and in the present invention) may be any type of microcapsule or balloon, as long as it has a shell and a vaporizable substance (as a core) contained inside the shell so that the shell is softened and expanded by a pressure (vapor pressure) of a gas (changed from the vaporizable substance) inside the shell by heating at the time of baking or the like and as long as an expansion thereof is controllable by the heat. That is, the shell of the thermally expandable microcapsule may be any shell as long as it is softened under a fixed temperature. For example, the shell may be formed from a polymer compound of a thermoplastic resin or the like such as a vinylidene chloride, an acrylonitrile, an acrylonitrile-vinylidene chloride copolymer, an acrylonitrile-methyl methacrylate copolymer. Moreover, the vaporizable substance (i.e. core) contained inside the shell may be any substance as long as it is vaporized at the softening temperature of the shell. For example, a substance used therefor may be a low-boiling organic solvent such as a low-boiling hydrocarbon like an isobutane or the like. It is within the scope of the invention to use one kind of thermally expandable microcapsule or two or more kinds of thermally expandable microcapsules in appropriate combination.

The thermally expandable microcapsule preferably has a median diameter in a range of 5μm to 50μm. That is, the median diameter thereof is set at 5μm or more in order to ensure a coating film to sufficiently expand and to have a desired thickness for performing an expected sound insulating function. Moreover, the median diameter thereof is preferably set at 50μm or less and more preferably set at 30μm or less in order to ensure the coating film to have an expected good chipping resistance. Specifically, if the thermally expandable microcapsule has the median diameter in the range of 5μm to 50μm, they expand approximately 50 to 100 times at their largest expansion. Thereby, the coating film is sufficiently expanded to perform a stable sound insulating property as well as to ensure a good chipping resistance.

In addition, the thermally expandable microcapsule preferably has an expansion start temperature in a range of 70°C to 130°C. As long as the thermally expandable microcapsule expands at a relatively low temperature in the range of 70°C to 130°C, it has commonly a maximum expansion temperature in a range of 110°C to 210°C. On the other hand, a thermal treatment temperature at the time of baking that the current automotive paint line adopts is relative low (commonly in a range of 120°C to 160°C). Thus, at such baking temperature, the thermally expandable microcapsule has no shell broken by the heat treatment at the time of baking, thereby becoming hollow microballoons that are highly expanded or have a high expansion rate. That is, the thermally expandable microcapsule is very suitable for use in the current automobile paint line. In such use, even with a small amount of mixing the thermally expandable microcapsule, a thick coating film with a desired thickness is efficiently formed to improve the sound insulating property of the coating film, while ensuring the chipping resistance. In other words, if the thermally expandable microcapsule in use has the expansion start temperature in the range of 70°C to 130°C and the maximum expansion temperature in the range of 110°C to 210°C, a maximum expansion rate before contraction is obtained on the thermally expandable microcapsule at the temperature of the thermal treatment temperature at the time of baking or the like. Moreover, in such case, a desired large thickness of coating film is efficiently obtained with a less mixing amount of the thermally expandable microcapsule. Furthermore, the coating film is endowed with both the properties of the chipping resistance and the sound insulation at the same time.

It is preferable to mix the thermally expandable microcapsule in a range of 2 parts by weight to 12 parts by weight to 100 parts by weight of the vinyl chloride resin. If the mixing amount is too less, the coating film is endowed with only a small film-thickening effect (i.e. small expansion rate) by the thermally expandable microcapsule. Thereby, the coating film is not able to ensure a sufficient sound insulating property. On the other hand, if the mixing amount of the thermally expandable microcapsules is too much, the chipping resistance is deteriorated. If the mixing amount of the thermally expandable microcapsules is in the range of 2 parts by weight to 12 parts by weight to 100 parts by weight of the vinyl chloride resin, the coating film is enabled to have a sufficient degree of the sound insulation and the chipping resistance that are required for an undercoating of an automobile. More preferable mixing amount of the thermally expandable microcapsules is in a range of 5 parts by weight to 10 parts by weight to 100 parts by weight of the vinyl chloride resin.

Any balloons in the form of hollow spheres may be used as the non-expandable hollow filler, as long as they maintain a prescribed hollow rate without being molten or expanded by the heat at the time of baking or the like. For example, an inorganic hollow filler or an organic hollow filler may be used as the non-expandable hollow filler. The inorganic hollow filler may be glass balloons, silica balloons, Shirasu balloons, inorganic carbon hollow body or hollow spheres, or the like. The organic hollow filler may be plastic hollow body or hollow spheres made of an organic synthetic resin such as a vinylidene chloride, an acrylonitrile, a polyvinylidene chloride or a copolymer thereof. One of them may be used alone, or two or more of them may be used in an appropriate combination.

The non-expandable hollow filler preferably has a median particle diameter in a range of 10μm to 50μm. That is, the median particle diameter of the non-expandable hollow filler is preferably set at 10μm or more to provide the non-expandable hollow filler with a desired compression strength and keep it from being broken in the spray painting, while giving it a moderate flow property to ensure good workability in painting. On the other hand, the median particle diameter of the non-expandable hollow filler is preferably set at 50μm or less to surely provide the coating film with desired properties such as a coating strength after drying, while preventing the non-expandable hollow filler from being clogged in the spray painting to enable formation of a uniform spray pattern and maintain workability in painting.

Moreover, the non-expandable hollow filler preferably has an absolute specific gravity in a range of 0.1 to 0.5. That is, the absolute specific gravity of the non-expandable hollow filler is preferably set at 0.1 or more in view of easy handling and workability. The absolute specific gravity of the non-expandable hollow filler is more preferably set at 0.2 or more. On the other hand, the absolute specific gravity of the non-expandable hollow filler is preferably set at 0.5 or less in view of ensuring a desired high lightweight effect even if the non-expandable hollow filler is mixed in a small amount. The absolute specific gravity of the non-expandable hollow filler is more preferably set at 0.4 or less.

The non-expandable hollow filler preferably has a mixing amount in a range of 10 parts by weigh to 50 parts by weigh to 100 parts by weight of the vinyl chloride resin. If the mixing amount of the non-expandable hollow filler is too small, the non-expandable hollow filler has a small specific gravity decreasing effect and is unable to ensure a desired low specific gravity for the coating film. On the other hand, if the mixing amount of the non-expandable hollow filler is too much, the chipping resistance of the coating film is deteriorated. If the mixing amount of the non-expandable hollow filler is in the range of 10 parts by weigh to 50 parts by weigh to 100 parts by weight of the vinyl chloride resin, the specific gravity decreasing effect is so high to make a weight of the coating film too small, while keeping the chipping resistance good. It is more preferable to set the mixing amount of the non-expandable hollow filler in a range of 15 parts by weigh to 30 parts by weigh to 100 parts by weight of the vinyl chloride resin.

As described above, in the present embodiment of vinyl chloride plastisol composition, the thermally expandable microcapsule and the non-expandable hollow filler are mixed in the vinyl chloride resin and the plasticizer as the main ingredients. If desired or needed, such vinyl chloride plastisol composition may be further mixed with a filler (another filler or bulking agent), an adhesion adding agent or adhesion promotor, a moisture absorbing agent, a solvent, and/or the like.

The filler may be used for bulking of the plastisol composition. The filler may also be used for controlling a viscosity, a flow property, a thixotropic nature or a dispersibility of the plastisol composition, thereby enhancing a coating workability, a coating property and a storage stability or improve a strength of the coating film after drying and an appearance of the coating film. As such filler, for example, there may be used alkaline earth metal carbonates or sulfates such as a calcium carbonate, a magnesium carbonate, a barium sulfate or the like. Moreover, the filler may be a mica, a silica, a talc, a diatomaceous earth, a kaolin, a clay, an alumina, a gypsum, a cement, converter a slag powder, a Shirasu powder, a glass powder, a graphite, a vermiculite, a zeolite, a calcium metasilicate, a zonolite, a potassium titanate, a rock wool, glass fibers, carbon fibers, an aluminum silicate, aramid fibers or the like. One of them may be used alone, or two or more of them may be used in appropriate combination. Particularly, among the silica or the calcium carbonate, fine silica particles and ultrafine calcium carbonate particles (colloidal calcium carbonate) are both made of inorganic fine particles. They act also as an anti-sagging agent to enhance the thixotropic nature of the composition and to increase the viscosity at a low shear rate, thereby improving more the anti-sagging property of the coating film. Such filler may be mixed generally in a proportion of 200 parts by weight to 100 parts by weight of the vinyl chloride resin. If the mixing amount of the filler is too much, the viscosity of the composition becomes too high, thereby making it hard to coat the composition uniformly or degrading the properties of the coating film such as the chipping resistance or the like.

The adhesion adding agent may be used to enhance adhesion (adhesiveness or stickiness) to a coated part such as an electrodeposition coating surface. For example, the platisol composition is applied usually after a primer coating by an electrodeposition coating. Thus, as the adhesion adding agent, it is particularly preferable to use a blocked isocyanate (for example, a xylene diisocyanate, a tetramethylene diisocyanate, a tolylene diisocyanate, a phenyl diisocyanate, a methyl diisocyanate, etc.) or an amide compound or the like such as a polyamide, a polyamine, a polyol or the like.

The moisture absorbing agent may be used to catch moisture absorbed in the plastisol composition so as to improve a foaming property against moisture absorption for preventing blister or bulge of the coating film due to the moisture. As the moisture absorbing agent, for example, it is preferable to use an calcium oxide, a magnesium oxide or the like, since they have a property to be combined with water by hydration reaction.

Moreover, the solvent may be used as a viscosity reducing agent for enhancing the coating workability or for having a good leveling property of the coating film after coating so as to improve its appearance. As the solvent, for example, there may be used a petroleum solvent, an aliphatic hydrocarbon solvent, an organic solvent having a relatively high boiling point, or the like. The petroleum solvent may be a naphtha, a turpentine oil, a paraffin, a mineral spirit, or the like. The aliphatic hydrocarbon solvent may be a butane, a pentane, a hexane, a heptane, an octane, an isooctane, a nonane, or the like, too. The organic solvent may be an aromatic solvent such as an alcohol, a benzene, a toluene, a xylene, or the like.

The present embodiment of vinyl chloride plastisol composition is composed of the above-described ingredients mixed therein. In a coating process, the plastisol composition may be prepared by uniformly mixing and dispersing the ingredients by use of a disperser mixer such as a planetary mixer, a grain mill, a kneader or the like. Thereafter, the plastisol composition may be coated on a predetermined coated part by an airless spray coating, an air spray coating, a brush coating, a roller coating, an electrostatic coating, or the like. As an exemplary use, the present embodiment of vinyl chloride plastisol composition may be coated on a surface of a steel plate on a lower structural part of a body of an automobile, such as a wheel house or an underfloor part, in a coating line of an automotive production line. In this case, the vinyl chloride plastisol composition is coated as a coating film on an electrodeposited surface of the steel plate after a degreasing step, a chemical conversion treatment step and a primer coating step of electrodeposition coating. Thereafter, a middle coat or a finish coat or the like is provided on outer plate parts of the car body. The plastisol composition coat is heated and hardened simultaneously in such baking and drying, thereby forming a coating film.

At this time, the present embodiment of vinyl chloride plastisol composition contains the thermally expandable microcapsules therein. Accordingly, when the heating starts in the baking step of the coating after the vinyl chloride plastisol composition is coated on the predetermined coated part, a temperature of the vinyl chloride plastisol composition rises. Thereby, the thermoplastic resin constituting the shell of the thermally expandable microcapsule starts being softened, whereas the vaporizable substance such as low-boiling hydrocarbons start being vaporized to raise an internal pressure of the shell. Thus, the thermally expandable microcapsules start expanding at the expansion start temperature to enlarge the thickness of the coating layer (coating film) of the vinyl chloride plastisol composition. Moreover, when the temperature of the vinyl chloride plastisol composition rises, the vinyl chloride resin as the main ingredient of the vinyl chloride plastisol composition starts polymerizing. Thereafter, the expansion of the thermally expandable microcapsules and the polymerization of the vinyl chloride resin are completed by keeping them at a fixed temperature for a fixed time period (commonly at a temperature of 120 to 160 degrees centigrade for 20 to 40 minutes in the coating line of the automotive production line). Consequently, there is provided a coating film that enlarged the thickness (or volume) and decreased the specific gravity before the baking.

As described above, first of all, the present embodiment of vinyl chloride plastisol composition contains the thermally expandable microcapsules. Thus, the vaporizable substance inside the thermally expandable microcapsule is vaporized at the time of baking to expand the shell. Consequently, the coating film (as a top layer made of the plastisol composition) of the coating layer (further including the primer layer below the coating film) is capable of becoming a thick film utilizing the volume expansion of the thermally expandable microcapsules. As a result, the coating film has an improved sound insulating property to lessen a splash noise that is generated when granules or pebbles or gravels or the like are skipped up to hit the car body.

At this time, the thickening of the coating film of the coating layer is obtained by using the volume expansion of the thermally expandable microcapsules. Thus, the specific gravity of the coating film becomes less than that before the baking. In addition, the non-expandable hollow filler is further mixed in the vinyl chloride plastisol composition in the present embodiment. Thus, the weight of the coating film (specific gravity of dry coating film) is small and the coating film is lightweight, while the coating film having a large thickness. That is, the present embodiment achieves the thickening of the coating film for enhancing the sound insulation, not by increasing the coating amount (of the composition itself) but by using the volume expansion of the thermally expandable microcapsules (e.g. while keeping the amount same). Thus, the present embodiment of vinyl chloride plastisol composition enables the coating film to be thickened without increasing the weight of the coating film. Consequently, the specific gravity of the coating film is reduced. Moreover, the non-expandable hollow filler is used in combination with the thermally expandable microcapsules. Thus, the present embodiment of vinyl chloride plastisol composition is capable of forming the coating film that has a very small specific gravity to be lightweight, without mixing the thermally expanding microcapsules in a large quantity. As a result, the vinyl chloride plastisol composition surely provides the coating film having both the functions or properties of the chipping resistance and the sound insulation at once.

On the other hand, it is concerned that the chipping resistance and the sound insulation are deteriorated by addition of the thermally expandable microcapsule and the non-expandable hollow filler. However, in the present embodiment of vinyl chloride plastisol composition, the coating film is thickened, while reducing the specific gravity thereof, by use of the volume expansion of the thermally expandable microcapsules without increasing the coating weight, as explained above. Moreover, the vinyl chloride plastisol composition achieves a desired low specific gravity of the coating film without mixing a large quantity of the thermally expandable microcapsules, by mixing the non-expandable hollow filler therein. Therefore, with the combination of the thermally expandable microcapsule and the non-expandable hollow filler, the vinyl chloride plastisol composition is allowed to reduce or curb the mixing amount of the thermally expandable microcapsule as well as the mixing amount of the non-expandable hollow filler. Specifically, the vinyl chloride plastisol composition surely achieves a desired chipping resistance by limiting the mixing amounts of the thermally expandable microcapsule and the non-expandable hollow filler within a predetermined range, while controlling the mixing amount of the vinyl chloride resin within a regulated range. As regards the chipping resistance, the vinyl chloride plastisol composition contains the thermally expandable microcapsule and the non-expandable hollow filler. In other words, the composition contains two kinds of hollow spheres or balloons having different particle distributions and different particle diameters in the coating film after baking. That is, the non-expandable hollow filler coexists with the hollow microspheres or microballoons formed from the thermally expandable microcapsules inside the coating film. It is guessed that such coexistence enables the coating film to increase resistance against an impact from the pebbles or gravels or the like, thereby preventing the pebbles or gravels from breaking through the coating film to damage a coated surface under the coating film or the coating layer.

In case of using a chemical blowing agent in order to expand and thicken the coating film, the chemical blowing agent is decomposed by heating and produces a gas, thereby foaming to expand the coating film. Consequently, the resultant bubbles tend to be non-uniform and large depending on a condition in raising a temperature, a part to be coated, an amount to be coated, or the like in an automotive production line (particularly of a coating line). Thus, it is difficult to control the bubbles and is not easy to stably ensure the desired properties such as the sound insulation, the chipping resistance and so on. By contrast, in the present embodiment, the thermally expandable microcapsule has its shell expanded by the pressure when the gasifiable substance therein is gasified by heating, thereby becoming hollow microspheres or microballoon to expand the coating film. Consequently, production of such microballoon is not affected by coating conditions such as a heating/hardening condition, a coated part and a coating amount, as well as by a viscosity or the like, at the time of heating and hardening. Thus, the hollow microsphere or microballoon after expansion is easy to become uniform and small closed cells, respectively. As a result, the vinyl chloride plastisol composition is hard to be cause a deterioration of the chipping resistance, thereby stably ensuring the desired/required properties such as the sound insulation and the chipping resistance. Moreover, the vinyl chloride plastisol composition is hard to be affected by the coating conditions and the viscosity and the like. Consequently, it is easy to control the expansion of the thermally expandable microcapsules also by adjusting not only the addition amount thereof but also the particle distribution and the particle diameter. As a result, it is easy to control the film thickness of the coating layer and the properties of the coating film.

As described above, the present embodiment of vinyl chloride plastisol composition may be applied to the lower structural parts or the like of the car body such as the wheel house or the underfloor parts or the like. In such application, the resultant coating film performs the sound insulating property to lessen the splash noise when the pebbles or gravels or the like hit against the steel plate of the automobile. In addition, the coating film obtained from the plastisol composition is lightweight and has an excellent chipping resistant property. Particularly, the coating film in the coating layer is thickened by the thermally expandable microcapsule that expanded their volumes by heating to be the hollow microsphere or microballoon. Consequently, the plastisol composition is hard to be affected by the coating condition or the viscosity or the like in forming the hollow microspheres or microballoons. Moreover, the hollow microspheres or microballoons form uniform small closed cells inside the coating film. Consequently, the coating film is enabled to offer the sound insulation and the chipping resistance and so on in more stable manner than the case in which a coating film is thickened by foaming of the chemical foam agent.

Moreover, in the present embodiment, the coating film of the coating layer is thickened by the thermally expandable microcapsules that are expanded by the heating at the time of baking or the like. Consequently, it is enough for the vinyl chloride plastisol composition to be coated on a desired part to be coated at a small thickness before the baking. Therefore, the vinyl chloride plastisol composition enables the coating amount to be reduced. Moreover, even if the viscosity of the plastisol composition is set at a low value, the vinyl chloride plastisol composition ensures a good coating workability and coating property (such as sagging prevention or the like).

Furthermore, in case that the chemical blowing agent is used in the vinyl chloride plastisol composition to expand and thicken the coating film, the chemical blowing agent is decomposed by heating to generate a blowing gas to expand the coating film. Consequently, if the viscosity of the vinyl chloride plastisol composition is low, it is difficult to catch bubbles or foams formed by the gas generation, so that the resultant coating film is easy to defoam. As a result, it is hard to obtain a thick coating film having a desired thickness. By contrast, the thermally expandable microcapsule has the internal vaporizable substance vaporized by heating to swell the shell by the internal pressure, thereby forming hollow microspheres or microballoons to expand the coating film. Consequently, even if the viscosity of the vinyl chloride plastisol composition is low, the hollow microsphere or the microballoon is held at an inside of the coating film by sphere's or balloon's skin. As a result, the plastisol composition of the present embodiment is capable of providing a coating film having a desired large thickness.

As described above, according to the present embodiment, the viscosity of the vinyl chloride plastisol composition may be set at a low value, thereby improving the storage stability.


EMBODIMENT


The vinyl chloride plastisol composition according to the embodiment of the invention is described specifically hereafter by showing several working examples (a working example 1 to a working example 3). The vinyl chloride plastisol composition according to the working examples of the invention contains a vinyl chloride resin, a plasticizer, a thermally expandable microcapsule, a non-expandable hollow filler, a filler (bulking agent), an adhesion adding agent, a solvent, and a moisture absorbing agent.

Specifically, in the working examples (working examples 1 to 3), a vinyl chloride-vinyl acetate copolymer ("Kanevinyl Paste PCH-175" manufactured by Kaneka Corporation, copolymer of vinyl chloride (95%) and vinyl acetate (5%)) was used for the vinyl chloride resin as a main ingredient. A dioctyl phthalate (DINP manufactured by J-Plus Co. Ltd.) was used for the plasticizer as another main ingredient.

Moreover, a microcapsule ("Matsumoto Microsphere F-82D" manufactured by Matsumoto Yushi-Seiyaku Co. Ltd., Expansion start temperature: 120°C, Maximum expansion temperature: 160°C, Mean particle size (as shown in the product): 20μm) was used as the thermally expandable microcapsule. The microcapsule is made by encapsulating a liquid carbon hydride of low boiling temperature as a vaporizable substance with a thermoplastic polymer shell made of an acrylonitrile-vinylidene chloride copolymer. Furthermore, a soda lime borosilicate glass ("Glass Bubbles K37"

**EP 2 918 647 A1**

manufactured by Sumitomo 3M Ltd., True density: 0.37 g·cm$^3$, Median diameter: 45μm) was used as the non-expandable hollow filler.

In addition, a calcium carbonate ("Calseed PL" manufactured by Konoshima Chemical Co. Ltd.) was used as the bulking agent. "Nouribond 308" (manufactured by Air Products and Chemicals, Inc.) was used as the adhesion adding agent. "Mineral Spirits A" of high-boiling solvent

(manufactured by JX Nippon Oil & Co., Ltd.) was used as a diluent for vinyl chloride plastisol to adjust the viscosity (i.e. as a viscosity modifier). A calcium oxide "QC-X" manufactured by Inoue Calcium Corporation) was used as the moisture absorbing agent. An upper part of Table 1 shows a composition (mixing amount and mixing ratio) of each of the vinyl chloride plastisol compositions according to the working examples 1 to 3.

[Table 1]

| Sol composition | Trade name (Material) | Working example 1 | | Working example 2 | | Working example 3 | |
|---|---|---|---|---|---|---|---|
| | | mixing ratio (weight %) | mixing amount (parts by weight) | mixing ratio (weight %) | mixing amount (parts by weight) | mixing ratio (weight %) | mixing amount (parts by weight) |
| Vinyl chloride resin | Kanevinyl paste PCH-175 (Vinyl Chloride-Vinyl Acetate Copolymer) | 16.4 | 100 | 25.8 | 100 | 45.6 | 100 |
| Plasticizer | DINP | 46.7 | 284.8 | 38.3 | 148.4 | 21.8 | 47.8 |
| Thermally expandable microcapsule | Matsumoto Microsphere F-82D | 1.6 | 9.8 | 1.5 | 5.8 | 2.7 | 5.9 |
| Non-expandable hollow filler | Glass Bubbles K37 (Soda lime borosilicate glass) | 3 | 18.3 | 7.5 | 29.1 | 9.2 | 20.2 |
| Filler | Calseed PL (Calcium carbonate) | 21.5 | 131.1 | 16.3 | 63.2 | 10.1 | 22.1 |
| Adhesion adding agent | Nourybond 308 | 2.1 | 12.8 | 2 | 7.8 | 2.2 | 4.8 |
| Solvent | Mineral Spirit A | 5.4 | 32.9 | 5.3 | 20.5 | 5.4 | 11.8 |
| Moisture absorbing agent | QC-X (Calcium oxide) | 3.3 | 20.1 | 3.3 | 12.8 | 3 | 6.6 |
| Total | | 100 | | 100 | | 100 | |
| Evaluation item | | | | | | | |
| Specific gravity Determination (O if 1.1 or less) | | ○ | | ○ | | ○ | |
| Sound insulation property Determination (O if 75dB or less) | | ○ | | ○ | | ○ | |
| Chipping-resistant property Determination (O if 40kg or more) | | ○ | | ○ | | ○ | |
| Storage stability Determination (O if increase rate 35% or less) | | ○ | | ○ | | ○ | |

[Table 2(2-1)]

| Sol composition | Trade name (Material) | Comparative example 1 | | Comparative example 2 | | Comparative example 3 | |
|---|---|---|---|---|---|---|---|
| | | mixing ratio (weight %) | mixing amount (parts by weight) | mixing ratio (weight %) | mixing amount (parts by weight) | mixing ratio (weight %) | mixing amount (parts bv weight) |
| Vinyl chloride resin | Kanevinyl paste PCH-175 (Vinyl Chloride-Vinyl Acetate Copolymer) | 29.7 | 100 | 27.0 | 100 | 29.5 | 100 |
| Plasticizer | DINP | 39.9 | 134.3 | 36.4 | 134.8 | 39.7 | 134.6 |
| Thermally expendable microcapsule | Matsumoto Microsphere F-82D | 0 | 0 | 0 | 0 | 1.6 | 5.4 |
| Non-expandable hollow filler | Glass Bubbles K37 (Soda lime borosilicate glass) | 0 | 0 | 8.9 | 33 | 0 | 0 |
| Filler | Calseed PL (Calcium carbonate) | 20.2 | 68.0 | 18.4 | 68.1 | 19.0 | 64.4 |
| Adhesion adding agent | Nourybond 308 | 1.5 | 5.1 | 1.4 | 5.2 | 1.5 | 5.1 |
| Solvent | Mineral Spirit A | 5.5 | 18.5 | 5.0 | 18.5 | 5.5 | 18.6 |
| Moisture absorbing agent | QC-X (Calcium oxide) | 3.2 | 10.8 | 2.9 | 10.8 | 3.2 | 10.8 |
| Total | | 100 | | 100 | | 100 | |
| Evaluation item | | | | | | | |
| Specific gravity Determination (O if 1.1 or less) | | × | | ○ | | × | |
| Sound insulation property Determination (O if 75dB or less) | | × | | × | | ○ | |
| Chipping-resistant property Determination (O if 40kg or more) | | ○ | | ○ | | ○ | |
| Storage stability Determination (O if increased rate 35% or less) | | ○ | | ○ | | ○ | |

[Table 2(2-2)]

| Sol composition | Trade name (Material) | Comparative example 4 | | Comparative example 5 | | Comparative example 6 | |
|---|---|---|---|---|---|---|---|
| | | mixing ratio (weight %) | mixing amount (parts by weight) | mixing ratio (weight %) | mixing amount (parts by weight) | mixing ratio (weight %) | mixing amount (parts by weight) |
| Vinyl chloride resin | Kanevinyl paste PCH-175 (Vinyl Chloride-Vinyl Acetate Copolymer) | 11.7 | 100 | 52.7 | 100 | 16.7 | 100 |

(continued)

| Sol composition | Trade name (Material) | Comparative example 4 | | Comparative example 5 | | Comparative example 6 | |
|---|---|---|---|---|---|---|---|
| | | mixing ratio (weight %) | mixing amount (parts by weight) | mixing ratio (weight %) | mixing amount (parts by weight) | mixing ratio (weight %) | mixing amount (parts by weight) |
| Plasticizer | DINP | 47 | 401.7 | 19 | 36.1 | 47.7 | 285.6 |
| Thermally expandable microcapsule | Matsumoto Microsphere F-82D | 1.6 | 13.7 | 0.4 | 0.8 | 1.6 | 9.6 |
| Non-expandable hollow filler | Glass Bubbles K37 (Soda lime borosilicate glass) | 7.3 | 62.4 | 10.1 | 19.2 | 1.1 | 6.6 |
| Filler | Calseed PL (Calcium carbonate) | 21.8 | 186.3 | 8.6 | 16.3 | 22 | 131.7 |
| Adhesion adding agent | Nourybond 308 | 2 | 17.1 | 1.9 | 3.6 | 2.2 | 13.2 |
| Solvent | Mineral Spirit A | 5.3 | 45.3 | 4.4 | 8.3 | 5.4 | 32.3 |
| Moisture absorbing agent | QC-X (Calcium oxide) | 3.3 | 28.2 | 2.9 | 5.5 | 3.3 | 19.8 |
| Total | | 100 | | 100 | | 100 | |
| Evaluation item | | | | | | | |
| Specific gravity Determination (O if 1.1 or less) | | ○ | | ○ | | × | |
| Sound insulation property Determination (O if 75dB or less) | | ○ | | × | | ○ | |
| Chipping-resistant property Determination (O if 40kg or more) | | × | | ○ | | ○ | |
| Storage stability Determination (O if increase rate 35% or less) | | ○ | | × | | ○ | |

As shown in the upper part of Table 1, according to the working example 1, the vinyl chloride resin is contained in an amount of 16.4% by weight (wt%) in the vinyl chloride plastisol composition. The thermally expandable microcapsules are contained in an amount of 9.8 parts by weight to 100 parts by weight of the vinyl chloride resin. The non-expandable hollow filler is contained in an amount of 18.3 parts by weight to 100 parts by weight of the vinyl chloride resin. According to the working example 2, the vinyl chloride resin is contained in an amount of 25.8% by weight (wt%) in the vinyl chloride plastisol composition. The thermally expandable microcapsules are contained in an amount of 5.8 parts by weight to 100 parts by weight of the vinyl chloride resin. The non-expandable hollow filler is contained in an amount of 29.1 parts by weight to 100 parts by weight of the vinyl chloride resin. According to the working example 3, the vinyl chloride resin is contained in an amount of 45.6% by weight (wt%) in the vinyl chloride plastisol composition. The thermally expandable microcapsule is contained in an amount of 5.9 parts by weight to 100 parts by weight of the vinyl chloride resin. The non-expandable hollow filler is contained in an amount of 20.2 parts by weight to 100 parts by weight of the vinyl chloride resin.

On the other hand, for comparison, vinyl chloride plastisol compositions were prepared according to compositions (mixing amounts and mixing ratios) of the comparison examples 1 to 6, respectively, as shown in Table 2. An upper part of Table 2 shows the composition of each of the vinyl chloride plastisol compositions according to the comparison examples 1 to 6.

As shown in the upper part of Table 2, the vinyl chloride plastisol composition according to the comparison example 1 contains the vinyl chloride resin, the plasticizer, the filler (bulking agent), the adhesion adding agent, the solvent, and the moisture absorbing agent, while using no thermally expandable microcapsule and no non-expandable hollow filler. The vinyl chloride plastisol composition according to the comparison example 2 contains the vinyl chloride resin, the plasticizer, the non-expandable hollow filler, the filler (bulking agent), the adhesion adding agent, the solvent, and the moisture absorbing agent, while using no thermally expandable microcapsules. The vinyl chloride plastisol composition according to the comparison example 3 contains the vinyl chloride resin, the plasticizer, thermally expandable microcapsules, the filler (bulking agent), the adhesion adding agent, the solvent, and the moisture absorbing agent, while using no non-expandable hollow filler.

The vinyl chloride plastisol compositions according to the comparison examples 4 to 6 respectively contain the vinyl chloride resin, the plasticizer, the thermally expandable microcapsule, the non-expandable hollow filler, the filler (bulking agent), the adhesion adding agent, the solvent, and the moisture absorbing agent, as in the working examples 1 to 3. On the other hand, according to the comparison example 4 of the vinyl chloride plastisol composition, a content of the vinyl chloride resin is decreased to 11.7% by weight. Moreover, according to the comparison example 4, the thermally expandable microcapsule is contained in an amount of 13.7 parts by weight to 100 parts by weight of the vinyl chloride resin, while the non-expandable hollow filler is contained in an amount of 62.4 parts by weight to 100 parts by weight of the vinyl chloride resin. That is, the comparison example 4 of the plastisol composition considerably increases the mixing ratios of both the thermally expandable microcapsules and the non-expandable hollow filler to the vinyl chloride resin, as compared with the working examples 1 to 3. Particularly, in the comparison example 4, the mixing ratio of the non-expandable hollow filler is about twice or about three times as large as those of the working examples 1 to 3. Moreover, according to the comparison example 5 of the vinyl chloride plastisol composition, a content of the vinyl chloride resin is increased up to 52.7% by weight. Moreover, according to the comparison example 5, the thermally expandable microcapsules are contained in an amount of 0.8 parts by weight to 100 parts by weight of the vinyl chloride resin, while the non-expandable hollow filler is contained in an amount of 19.2 parts by weight to 100 parts by weight of the vinyl chloride resin. That is, the comparison example 5 of the plastisol composition considerably decreases the mixing ratio of the thermally expandable microcapsule to the vinyl chloride resin, as compared with the working examples 1 to 3. Specifically, in the comparison example 5, the mixing ratio of the thermally expandable microcapsule to the vinyl chloride resin is about one seventh to about one twelfth of those of the working examples 1 to 3. Furthermore, according to the comparison example 6 of the vinyl chloride plastisol composition, a content of the vinyl chloride resin is increased up to 16.7% by weight. Moreover, according to the comparison example 6, the thermally expandable microcapsules are contained in an amount of 9.6 parts by weight to 100 parts by weight of the vinyl chloride resin, while the non-expandable hollow filler is contained in an amount of 6.6 parts by weight to 100 parts by weight of the vinyl chloride resin. That is, the comparison example 6 of the plastisol composition considerably decreases the mixing ratio of the non-expandable hollow filler to the vinyl chloride resin, as compared with the working examples 1 to 3. Specifically, in the comparison example 6, the mixing ratio of the non-expandable hollow filler to the vinyl chloride resin is about one third to about one fifth of those of the working examples 1 to 3. It should be noted that the comparison examples 1 to 6 (particularly, the comparison examples 4 to 6) were prepared on the basis of the inventors' own knowledge and experience only for comparison purpose with the working examples 1 to 3. In particular, it should be emphasized that the comparison examples 4 to 6 never constitute the prior art.

After the preparation, the vinyl chloride plastisol compositions according to the working examples 1 to 3 and the comparison examples 1 to 6 were evaluated on their properties and characteristics (or performances). That is, as shown in lower parts of Table 1 and Table 2, the evaluation tests were conducted on each of evaluation items: a specific gravity, a sound insulation, a chipping resistance, and a storage stability. In conducting the evaluation, each of the vinyl chloride plastisol compositions having the mixture of ingredients as shown in Table 1 and Table 2 was prepared by uniformly mixing and dispersing the ingredients using a mixer/disperser of a planetary mixer.

On the specific gravity, a wet specific gravity of the vinyl chloride plastisol composition after the preparation was measured at a temperature of 20°C by a specific gravity cup (pyknometer) method (JIS K-5400 4.6.2, ISO 2811), and its value was calculated by dividing a weight by a volume (value = weight / volume).

On the sound insulation, first of all, the vinyl chloride plastisol composition after the preparation was coated by a spray painting method using an airless pump on an area of 190 mm x 190 mm at a central portion of a top surface of an electrodeposited steel plate of 300 mm x 300 mm x 1.6 mm, so that a resultant coating film (before baking) has a film thickness of 2 mm. Then, the coating film was baked in an electric furnace for 20 minutes at a temperature of 130°C, which is the same heating condition as the common baking step for the middle coat or the finish coat on outer plate portions of the car body paint. Thereafter, the coating film (after heating for baking) was cooled to a temperature of 20°C to harden the coating film on the steel plate. Thus, there was prepared a coated plate as a test piece, i.e. a steel plate on a top surface of which a hardened coating film was formed. Then, the coated plate was held at an angle of 45° to a vertical plane, and a steel ball having a diameter of 8 mm was dropped thereon from a position of 2 meters high above a central part of the coating film of the coated plate. At this time, an impact sound when the steel ball hit the coating film of the coated plate was measured by a microphone installed at a location 200 mm away from a center of the coated plate in a horizontal direction. It was determined as "○" (a symbol representing a good result, meaning the test piece passed a predetermined criteria) in case that the impact sound was not more than 75 dB. On the other hand, it was determined as "×" (a symbol representing a bad result, meaning the test piece did not pass a predetermined criteria) in case that the impact sound was more than 75 dB. The measurement of the impact sound was conducted under the following conditions.

Measurement Conditions: Ch single mode (800 lines)
Data Take-in Condition of Frequency Range of 10 kHz: time period of 80 ms
Frequency Analysis on Average of 8 Counts: 1/3 octave
Based on A-Characteristic Correction (i.e. the noise level was determined based upon a frequency weighted characteristic correction value as shown in JIS 1509-1 or "A-weighted sound pressure level".)

On the chipping resistance, the vinyl chloride plastisol composition after the preparation was coated on an electrodeposited steel plate of 70 mm x 150 mm x 0.8 mm, so that a resultant coating film (before baking) has a film thickness of 1 mm. Then, the coating film was baked for 20 minutes at a temperature of 130°C. Thereafter, the coating film (after heating for baking) was cooled to a temperature of 20°C. Thus, by substantially the same process for the test piece for the sound insulation test, there was prepared a coated plate as a test piece on which a hardened coating film with a smaller thickness was formed. Then, the coated plate was held at an angle of 60° to a vertical plane, and a M4 brass nut regulated in JIS B1181 was dropped thereon from a position of 2 meters high above the coated plate through a pipe having a diameter of 2 cm. At this time, a total weight of the nut was measured when the nut broke through the coating film to form a hole reaching the electrodeposited steel plate. The hole was equated to a chipping damage on the coated plate. It was determined as "○" in case that there was no chipping damage on the coated plate even when the weight of the dropped nut was 40kg or more. On the other hand, it was determined as "×" in case that there was a chipping damage on the coated plate even when the weight of the dropped nut was less than 40kg.

On the storage stability (viscosity stability), B-type rotational viscometer (manufacture by Toki Sangyo Co., Ltd.) was used as a viscosimeter to measure a viscosity of the vinyl chloride plastisol composition. The storage stability was evaluated by an increase rate of viscosity (change rate of viscosity) of the plastisol composition from an initial time when the plastisol composition was stored for 10 days at a temperature of 35°C. Specifically, an initial viscosity of the vinyl chloride plastisol composition after the preparation was measured by the B-type rotational viscometer (for one minute at 20 rpm). Then, the vinyl chloride plastisol composition (after measurement) was put into a closed contained and stored for 10 days at the temperature of 35°C. Thereafter, the vinyl chloride plastisol composition was cooled to a temperature of 20°C, and then the viscosity of the vinyl chloride plastisol composition was measured by the B-type rotational viscometer (for one minute at 20 rpm). Then, the increase rate of viscosity from the initial value was calculated in accordance with the following formula (1).

$$\text{Increase rate of viscosity} = [\{\text{viscosity after 10 days - initial viscosity}\} / \text{initial viscosity}] \times 100 \cdots (1)$$

It was determined as "○" in case that the increase rate of viscosity was 35% or less. On the other hand, it was determined as "×" in case that the increase rate of viscosity was more than 35%.

As shown in the lower part of Table 1, in each of the working examples 1 to 3, the wet specific gravity of the plastisol composition was not more than 1.1 and is a low specific gravity. Moreover, the coating film formed on the coated plate exhibited a high sound insulation of 75dB or less, while performing a good chipping resistance. Thus, the coating film fully satisfied the sound insulation and the chipping resistance required for the undercoating. That is, there was formed a coating film that satisfied the required performance in the chipping resistance and that was endowed with the lightweight property and the good sound insulating property at once. Moreover, it was found that the vinyl chloride plastisol composition had a low increase rate of viscosity during storage for 10 days at the temperature of 35°C and was excellent in the storage stability as the undercoating for automobiles, thereby having good keeping quality.

By contrast, as shown in the lower part of Table 2, according to the comparison example 1 that contained no thermally expandable microcapsule and no non-expandable hollow filler, the plastisol composition was good in the storage stability and the coating film had a fine chipping resistance. However, the wet specific gravity of the plastisol composition was more than 1.1, so that the plastisol composition lacked the lightweight property. Moreover, the coating film produced by the plastisol composition was found to be insufficient in a desired sound insulating property in the measurement of the sound insulation. Furthermore, according to the comparison example 2 that contained the non-expandable hollow filler but no thermally expandable microcapsule, the plastisol composition had a low wet specific gravity. Thus, the plastisol composition was good in the storage stability and the coating film had a fine chipping resistance. However, the coating film produced by the plastisol composition was found to be insufficient in a desired sound insulating property. In addition, according to the comparison example 3 that contained the thermally expandable microcapsule but no non-expandable hollow filler, the plastisol composition was good in the storage stability and the coating film was fine in the chipping resistance and the sound insulation. However, the plastisol composition had a high wet specific gravity. Consequently, the plastisol composition was large in the wet specific gravity and could not achieve an improved lightweight property having 1.1 or less in the wet specific gravity as a desired low specific gravity.

According to the comparison example 4 that contained the vinyl chloride resin in a smaller amount, the plastisol composition had a low wet specific gravity. Thus, the plastisol composition was good in the storage stability and the coating film had a fine sound insulation. However, the coating film lacked a chipping resistance. Moreover, according to the comparison example 5 that mixed the thermally expandable microcapsule in a smaller proportion to the vinyl chloride resin, the plastisol composition had a low wet specific gravity. Thus, the coating film formed by the plastisol composition was good in the chipping resistance. However, it was evaluated that the resultant coating film was inferior in the sound insulation. In addition, in the comparison example 5, since the plastisol composition contained the vinyl chloride resin in a large quantity, the viscosity thereof was high. Consequently, the plastisol composition was inferior in the storage stability, too. Furthermore, according to the comparison example 6 that mixed the non-expandable hollow filler in a smaller proportion to the vinyl chloride resin, the plastisol composition had good storage stability, while the obtained coating film was fine in the chipping resistance and the sound insulation. However, the wet specific gravity could not be 1.1 or less. Thus, it was evaluated that the plastisol composition was inferior in the lightweight property.

It is understood from the test results of the comparison example 5 that, if the mixing amount of the thermally expandable microcapsules is too small, the coating film is unable to ensure an excellent sound insulation that is 75 dB or less. On the other hand, it is understood that, if the mixing amount of the thermally expandable microcapsules is too large, the chipping resistance of the coating film is deteriorated. In order to ensure the excellent sound insulation and secure the good chipping resistance, the thermally expandable microcapsules is mixed preferably in the range of 2 parts by weigh to 12 parts by weight, more preferably in the range of 5 parts by weigh to 10parts by weight to 100 parts by weigh of the vinyl chloride resin.

It is understood from the test results of the comparison example 6 that, if the mixing amount of the non-expandable hollow filler is too small, the plastisol composition is unable to ensure a high lightweight property that is obtained by the wet specific gravity of 1.1 or less. On the other hand, it is understood that, if the mixing amount of the non-expandable hollow filler is too large, the chipping resistance of the coating film is deteriorated. In order to ensure the high lightweight property and secure the good chipping resistance, it is preferable to mix the non-expandable hollow filler in the range of 10 parts by weigh to 50 parts by weight, more preferably in the range of 15 parts by weight to 30 parts by weight to 100 parts by weigh of the vinyl chloride resin.

It is understood from the test results of the comparison example 4 that, if the content of the vinyl chloride resin is too small, the coating film is unable to ensure the chipping resistance required for the undercoating of automobiles. On the other hand, it is understood that, if the content of the vinyl chloride resin is too large, it is impossible to ensure an excellent storage stability of the plastisol composition for keeping its quality good for a long period of time even under a high temperature condition in summertime. In order to ensure the high chipping resistance required for the undercoating of automobiles and secure the excellent storage stability even in case of adding the thermally expandable microcapsule and the non-expandable hollow filler, it is preferable to contain the vinyl chloride resin in the range of 15% by weigh to 50% by weight in the plastisol composition.

As described above, in the vinyl chloride plastisol compositions according to the working examples 1 to 3 wherein the thermally expandable microcapsule and the non-expandable hollow filler are mixed, the thermally expandable microcapsule is added in the range of 2 parts by weight to 12 parts by weight to 100 parts by weight of the vinyl chloride resin, while the non-expandable hollow filler is added in the range of 10 parts by weight to 50 parts by weight to 100 parts by weight of the vinyl chloride resin. Thereby, the coating film is thickened by the volume expansion due to the thermally expandable microcapsules without increasing the coating weight. Moreover, since the non-expandable hollow filler is added, the plastisol composition achieves a low specific gravity without mixing the thermally expandable microcapsules in a large quantity. Consequently, the coating film is endowed with the good sound insulating property and the lightweight property. In addition, since the vinyl chloride resin is contained in the range of 15% by weigh to 50% by weight in the vinyl chloride plastisol composition, the sound insulation is enhanced, while the good storage stability of the plastisol composition is maintained and the chipping resistance is kept fine.

As seen from the mixing ratio or mixing amount ratio of the working examples 1 to 3, in the vinyl chloride plastisol composition of the present invention, the vinyl chloride resin may be contained in a range of about 16 wt% to about 46 wt%. The non-expandable hollow filler may be mixed in a range of about 18 parts by weight to about 30 parts by weight to 100 parts by weight of the vinyl chloride resin. Moreover, seeing from another aspect, the thermally expandable microcapsule may be mixed in a range of about 1 wt% to about 3 wt%, while the non-expandable hollow filler may be mixed in a range of about 3 wt% to about 10 wt%, whereas the vinyl chloride resin may be contained in a range of about 16 wt% to about 46 wt%. Furthermore, seeing from still another aspect, the ratio between the mixing amount of the thermally expandable microcapsule and the mixing amount of the non-expandable hollow filler may be about 1 to 2 or about 1 to 3 or about 1 to 5. That is, in the invention, the thermally expandable microcapsules are preferably mixed in an amount about one half or about one third or about one fifth of the amount of the non-expandable hollow filler. In other words, the non-expandable hollow filler is preferably mixed in an amount about twice or about three times or about fifth times as large as the amount of the thermally expandable microcapsules.

As explained above, according to the embodiment and the working examples of the invention, the vinyl chloride plastisol composition uses the thermally expandable microcapsule and the non-expandable hollow filler in combination. Consequently, the coating film formed from the plastisol composition is high in the sound insulation and good in the chipping resistance even if it has a low specific gravity. Moreover, the thermally expandable microcapsules are hardly affected by the coating conditions and the viscosity at the time of heating and hardening, thereby to expand to be hollow microspheres or microballoons as uniform small closed cell. Consequently, it is easy to control the bubble or foams of the hollow microsphere or microballoon. As a result, the coating film to be formed is enabled to surely have stable properties. Moreover, by achieving the low specific gravity of the coating film, the vehicle becomes lightweight. Consequently, the vinyl chloride plastisol composition contributes for improvement in fuel consumption of the automobiles or the like.

In the description of the above-mentioned embodiment and working examples, the vinyl chloride plastisol composition is applied as a paint material for the undercoating of the automobile. However, the vinyl chloride plastisol composition may be used for another application such as an application as a sealing material or an adhesive or the like, for example.

Moreover, in practicing the present invention, there is no limitation in configurations, components or ingredients, mixing, quality of materials, manufacturing methods and the like used for other parts or elements of the vinyl chloride plastisol composition. For example, the plastisol composition may contain a stabilizer, a pigment, a leveling agent, and/or a thixotropy adding agent. The stabilizer may be an epoxy-based stabilizers, metal soaps, inorganic acid salts, organic metal compounds, or the like. The pigment may be a cadmium yellow, a phthalocyanine blue, a titanium oxide, a carbon black, or the like. The leveling agent may be a silicone resin, a dimer acid-modified epoxy resin of high-viscosity type or low-viscosity type, or the like. The thixotropy adding agent may be a silicon dioxide or the like.

In addition, with respect to the numerical values listed in the embodiment and the working examples of the present invention, all of them do not show critical values. Some values only show desired or preferred values for practicing the invention. Thus, the present invention is practicable even if the values are slightly changed.

The preferred embodiments described herein are illustrative and not restrictive, the scope of the invention being indicated in the appended claims and all variations which come within the meaning of the claims are intended to be embraced therein.

## Claims

1. A vinyl chloride plastisol composition comprising a main ingredient composed of a vinyl chloride resin and a plasticizer, **characterized in that** the vinyl chloride plastisol composition contains a thermally expandable microcapsule, and a non-expandable hollow filler.

2. A vinyl chloride plastisol composition according to claim 1, in which the thermally expandable microcapsule has an expansion start temperature in a range of 70 to 130 degrees centigrade.

3. A vinyl chloride plastisol composition according to claim 1, in which the thermally expandable microcapsule has a mixing ratio of 2 to 12 parts by weight to 100 parts by weight of the vinyl chloride resin.

4. A vinyl chloride plastisol composition according to claim 1, in which the non-expandable hollow filler has a median diameter in a range of 10 to 50 micrometers and an absolute specific gravity in a range of 0.1 to 0.5.

5. A vinyl chloride plastisol composition according to claim 1, in which the non-expandable hollow filler has a mixing ratio in a range of 10 to 50 parts by weight to 100 parts by weight of the vinyl chloride resin.

6. A vinyl chloride plastisol composition according to claim 1, in which the vinyl chloride resin is contained in a range of 15% by weight to 50% by weight in the vinyl chloride plastisol composition.

7. A vinyl chloride plastisol composition according to claim 1, in which:

the thermally expandable microcapsule has a mixing ratio of 2 to 12 parts by weight to 100 parts by weight of the vinyl chloride resin, and

the non-expandable hollow filler has a mixing ratio in a range of 10 to 50 parts by weight to 100 parts by weight of the vinyl chloride resin.

8. A vinyl chloride plastisol composition according to claim 1, in which:

the vinyl chloride resin is contained in a range of 15% by weight to 50% by weight in the vinyl chloride plastisol composition,

the thermally expandable microcapsule has a mixing ratio of 2 to 12 parts by weight to 100 parts by weight of the vinyl chloride resin, and

the non-expandable hollow filler has a mixing ratio in a range of 10 to 50 parts by weight to 100 parts by weight of the vinyl chloride resin.

Europäisches
Patentamt

European
Patent Office

Office européen
des brevets

**EUROPEAN SEARCH REPORT**

Application Number

EP 15 15 8464

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 93/24581 A1 (CASCO NOBEL AB [SE]; LYSELL LENNART [SE]; MALMBOM LARS [SE]) 9 December 1993 (1993-12-09) * claims 1,8 * * Example * | 1-8 | INV. C09D127/06 C08K13/04 ADD. C08L27/06 C08K5/12 C08K7/22 |
| Y,D | JP H06 157976 A (NISSAN MOTOR; ASAHI TSUSHO KK; PARKER CORP KK) 7 June 1994 (1994-06-07) * abstract * | 1-8 | |
| Y | US 5 212 215 A (NANRI YASUO [JP] ET AL) 18 May 1993 (1993-05-18) * examples 12-20; table 2 * | 1-8 | |
| Y,D | JP H06 128438 A (AISIN CHEM) 10 May 1994 (1994-05-10) * abstract * | 1-8 | |
| Y | JP H01 213369 A (MITSUBISHI MOTORS CORP) 28 August 1989 (1989-08-28) * abstract * | 1-8 | TECHNICAL FIELDS SEARCHED (IPC) |
| Y | JP S62 100560 A (NIPPON TOKUSHU TORYO CO LTD) 11 May 1987 (1987-05-11) * abstract * | 1-8 | C09D C08K |

The present search report has been drawn up for all claims

| Place of search | Date of completion of the search | Examiner |
|---|---|---|
| The Hague | 28 July 2015 | Rodríguez, Luis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**　　　　EP 15 15 8464

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2015

| Patent document cited in search report | | Publication date | Patent family member(s) | | Publication date |
|---|---|---|---|---|---|
| WO 9324581 | A1 | 09-12-1993 | AU | 664294 B2 | 09-11-1995 |
| | | | DE | 69316749 D1 | 05-03-1998 |
| | | | DE | 69316749 T2 | 16-07-1998 |
| | | | EP | 0643750 A1 | 22-03-1995 |
| | | | ES | 2113538 T3 | 01-05-1998 |
| | | | JP | 2997546 B2 | 11-01-2000 |
| | | | JP | H07507339 A | 10-08-1995 |
| | | | TW | 226396 B | 11-07-1994 |
| | | | US | 5520961 A | 28-05-1996 |
| | | | WO | 9324581 A1 | 09-12-1993 |
| JP H06157976 | A | 07-06-1994 | JP | 3043191 B2 | 22-05-2000 |
| | | | JP | H06157976 A | 07-06-1994 |
| US 5212215 | A | 18-05-1993 | NONE | | |
| JP H06128438 | A | 10-05-1994 | NONE | | |
| JP H01213369 | A | 28-08-1989 | NONE | | |
| JP S62100560 | A | 11-05-1987 | JP | H0348232 B2 | 23-07-1991 |
| | | | JP | S62100560 A | 11-05-1987 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10237250 A
- JP 5117575 A
- JP 6128438 A
- JP 6157976 A